# DEMANDE DE BREVET EUROPEEN

(11) **EP 3 562 216 A1**
(43) Date de publication de la demande: **30.10.2019**
(21) Numéro de dépôt: 19170863.5
(22) Date de dépôt: 24.04.2019
(51) Int. Cl.: H04W 48/18

(54) **PROCÉDÉ DE GESTION DES ACCÈS À UNE INFRASTRUCTURE DE COMMUNICATION AVEC UN MODE D'AGRÉGATION DE LIENS ET DISPOSITIFS ASSOCIÉS**

(30) Priorité: 24.04.2018 FR 1800356
(71) Demandeur: Thales, 92400 Courbevoie (FR)
(72) Inventeur: BITTARD, Anne, 92622 GENNEVILLIERS (FR); PERINI, Julien, 59832 LAMBERSART (FR)
(74) Mandataire: Lavoix

(57) **Abrégé**

L'invention concerne un procédé de gestion des accès à une infrastructure de télécommunication (10) comprenant des réseaux de télécommunication propres à fournir des services et un modem (13) propre à se connecter aux réseaux selon un premier mode de fonctionnement dans lequel le modem (13) utilise un unique lien avec un réseau ou selon un deuxième mode de fonctionnement dans lequel le modem (13) utilise au moins deux liens. Le procédé comporte une étape de prise de la décision de connecter le modem (13) aux réseaux dans un mode de fonctionnement différent du mode de fonctionnement courant, la prise de décision étant basée sur au moins un critère.

## Description

La présente invention concerne un procédé de gestion des accès à une infrastructure de communication. La présente invention se rapporte également à un produit programme d'ordinateur, un support lisible d'informations et une infrastructure de communication associés.

Pour l'ensemble des sigles dans la description qui suit, le lecteur est invité à se reporter à la partie LEXIQUE.

Des objets sont souvent conçus pour pouvoir communiquer entre eux sans intervention humaine, notamment dans le cadre du développement récent de l'« Internet des objets ». Ces objets communiquent en général entre eux via des réseaux de communication, qui sont souvent des réseaux sans fil tels que des réseaux de téléphonie mobile. Pour accéder à de tels services de communication, un objet connecté utilise fréquemment un modem dans lequel est installé un dispositif de connexion, comprenant généralement une carte SIM fournie par un MNO, pour accéder au réseau dudit MNO.

Toutefois, il existe des situations dans lesquelles l'utilisation de certains services ou réseaux est dégradée, voire impossible. L'objet n'est, par exemple, plus en mesure d'accéder au réseau, ou ne dispose pas d'un débit suffisant pour mettre en oeuvre certaines de ses fonctions associées à la communication.

De telles situations résultent souvent de la perte ou de la dégradation de la couverture radio du réseau du MNO causée, par exemple, par un défaut technique dudit réseau, ou par un maillage territorial incomplet de la couverture radio dudit MNO lorsque les objets connectés sont mobiles (par exemple des dispositifs embarqués dans des véhicules) ou déplaçables (par exemple des objets destinés à être utilisés sur zone lors d'interventions ou d'observations de situations spécifiques, tels que des capteurs ou encore des équipements d'intervention pour des équipes de secours ou de sécurité).

Il existe donc un besoin de disposer d'une solution permettant d'améliorer la résilience de la connexion d'objets connectés.

A cet effet, il est proposé un procédé de gestion des accès à une infrastructure de télécommunication, l'infrastructure de télécommunication comprenant des réseaux de télécommunication, les réseaux de télécommunication étant propres à fournir des services, et un modem propre à se connecter aux réseaux selon un premier mode de fonctionnement dans lequel le modem établit un ou plusieurs liens avec des réseaux, mais utilise un unique lien avec un réseau, ou selon un deuxième mode de fonctionnement dans lequel le modem établit au moins deux liens avec les réseaux , et utilise au moins deux liens. Le procédé comporte les étapes de connexion du modem aux réseaux selon un des deux modes de fonctionnement, et de prise de la décision de connecter le modem aux réseaux dans un mode de fonctionnement différent du mode de fonctionnement courant, la prise de décision étant basée sur au moins un critère.

Suivant des modes de réalisation particuliers, le procédé de gestion comprend une ou plusieurs des caractéristiques suivantes, prise(s) isolément ou suivant toutes les combinaisons techniquement possibles :
- au moins un critère est choisi dans le groupe constitué de la variation de la qualité de service fournie par les réseaux par rapport à un seuil, l'amplitude du mouvement du modem par rapport à un seuil, et la position du modem par rapport à des zones prédéfinies.
- un critère est choisi dans le groupe constitué de la variation de la qualité de service fournie par les réseaux par rapport à un seuil, l'amplitude du mouvement du modem par rapport à un seuil, et la position du modem par rapport à des zones prédéfinies.
- le critère est l'accomplissement d'une séquence d'au moins une action de l'utilisateur du modem, notamment soit directement sur le modem, soit via un dispositif de pilotage du modem.
- le procédé comporte une étape de basculement du deuxième mode de fonctionnement au premier mode de fonctionnement (dès qu'un seul lien peut être établi avec l'ensemble des réseaux.
- le critère est au moins un paramètre de la configuration du modem.
- les paramètres de la configuration incluent les droits d'utilisation des deux modes, l'éligibilité de chaque lien ou de chaque type de réseau au deuxième mode de fonctionnement, le niveau minimum de qualité de service requis par type de lien et les règles de répartition du trafic entre les différents liens utilisés.
- les paramètres de la configuration sont choisis parmi les droits d'utilisation des deux modes, l'éligibilité de chaque lien ou de chaque type de réseau au deuxième mode de fonctionnement, le niveau minimum de qualité de service requis par type de lien et les règles de répartition du trafic entre les différents liens utilisés.
- l'infrastructure de télécommunication comporte un dispositif de gestion, la configuration du modem étant paramétrée par le dispositif de gestion indépendamment des opérateurs de réseaux.
- un critère est la variation de la qualité de service fournie par les réseaux par rapport à un seuil.
- un critère est l'amplitude du mouvement du modem par rapport à un seuil.
- un critère est la position du modem par rapport à des zones prédéfinies.
- l'infrastructure de télécommunication comporte un dispositif de gestion, la configuration du modem étant paramétrée par le dispositif de gestion indépendamment des opérateurs de réseaux.
- l'infrastructure de télécommunication comporte, en outre, un module de décision propre à mettre en oeuvre l'étape de prise de décision, le dispositif de gestion est propre à paramétrer un module de décision.
- le dispositif de gestion est propre à paramétrer un module de décision par une communication asynchrone par rapport à la mise en oeuvre de l'étape de prise de décision par le module de décision.
- un critère est la détection de l'accomplissement d'une séquence d'au moins une action de l'utilisateur du modem, la détection étant réalisée soit directement sur le modem, soit via un dispositif de pilotage du modem. Il est également proposé un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en oeuvre d'un procédé tel que défini précédemment ou d'une étape d'un procédé tel que défini précédemment lorsque le programme d'ordinateur est mis en oeuvre sur l'unité de traitement des données.

Il est, en outre, proposé un support lisible d'informations sur lequel est mémorisé un programme d'ordinateur comprenant des instructions de programme, le programme d'ordinateur étant chargeable sur une unité de traitement de données et adapté pour entraîner la mise en oeuvre d'un procédé tel que défini précédemment ou d'une étape d'un procédé tel que défini précédemment lorsque le programme d'ordinateur est mis en oeuvre sur l'unité de traitement des données.

Il est également proposé une infrastructure de télécommunication comprenant des réseaux de télécommunication, les réseaux étant propres à fournir des services. L'infrastructure de télécommunication comporte, également, un modem propre à se connecter aux réseaux selon un premier mode de fonctionnement dans lequel le modem établit un ou plusieurs liens avec des réseaux, mais utilise un unique lien avec un réseau, ou selon un deuxième mode de fonctionnement dans lequel le modem établit au moins deux liens avec les réseaux et utilise au moins deux liens. L'infrastructure de télécommunication est propre à connecter le modem aux réseaux selon un des deux modes de fonctionnement, et à prendre la décision de connecter le modem aux réseaux dans un mode de fonctionnement différent du mode de fonctionnement courant, la prise de décision étant basée sur au moins un critère.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une représentation schématique d'une infrastructure de télécommunication ;
- figure 2, une vue schématique d'un modem faisant partie de l'infrastructure de la figure 1, et
- figure 3, un logigramme illustrant un exemple de mise en oeuvre d'un procédé de gestion des accès à l'infrastructure de la figure 1.

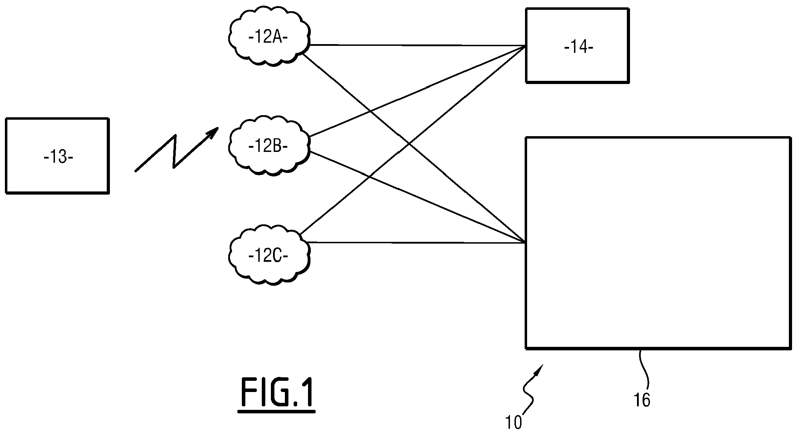

La figure 1 représente une infrastructure 10 de télécommunication comprenant au moins deux réseaux 12 de télécommunication, un modem 13, un équipement de contrôle d'accès 14 et un dispositif de gestion 16.

Les réseaux 12 sont propres à fournir des services.

Chaque réseau 12 est, par exemple, propre à mettre en oeuvre des services de télécommunication mobile du type 2G, 3G, 4G et suivants.

Il est à noter que la nature des réseaux 12 est indifférente. Le procédé est illustré par un mode de réalisation utilisant trois réseaux de télécommunication 12 mobiles, mais il peut aussi être mis en oeuvre en utilisant des réseaux de télécommunication Wi-Fi ou satellite, voire filaires par exemple.

Chaque réseau 12 est relié à l'équipement de contrôle d'accès 14 qui est propre à gérer l'authentification et le contrôle d'accès du modem 13 aux réseaux 12 pour la mise en oeuvre de services de télécommunication.

Dans le cas de la figure 1, à titre d'exemple, l'infrastructure 10 comprend un premier réseau 12_{A}, un deuxième réseau 12_{B} et un troisième réseau 12c appartenant respectivement à trois MNO nationaux distincts entre eux, notés MNO_{A}, MNO_{B} et MNO_{C}.

De fait, il est proposé de gérer les liens de communication avec les réseaux 12 que le modem 13 est propre à établir et ces liens ne dépendent pas de la nature des réseaux 12.

Le terme « modem », (mot-valise, pour « modulateur-démodulateur »), se rapporte à un périphérique servant à communiquer avec des utilisateurs distants par l'intermédiaire d'un réseau.

Chaque modem 13 est, par exemple, un dispositif électronique propre à recevoir, collecter, générer ou à exploiter des données, et est propre à transmettre les données à travers chaque réseau 12 auquel le modem 13 est susceptible de se connecter. Les données ainsi échangées peuvent, par exemple, comprendre des données de services de communication (voix, image, vidéo), des données de télémesure ou des données de télémétrie.

Lorsque le modem 13 sert uniquement à effectuer de la conversion et de l'acheminement statique des flux entre des points, le modem 13 est un modem gateway.

Lorsque le modem 13 possède, en outre, la capacité d'effectuer de l'acheminement dynamique, le modem 13 est modem routeur.

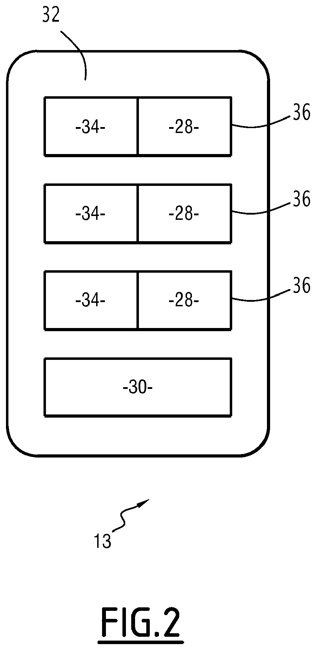

La figure 2 illustre un exemple de modem 13 de l'infrastructure 10 de la figure 1.

Dans l'exemple de la figure 2, le modem 13 comprend un terminal 32, le terminal comportant plusieurs modules d'émission-réception 36 et un module de décision 30.

Dans le cas de la figure 2, le modem 13 comprend trois modules d'émission-réception 36.

C'est au travers d'un module d'émission-réception 36 que le modem 13 établit un lien de communication avec un réseau 12.

En l'espèce, du fait de la présence des trois modules d'émission-réception 36, le modem 13 est propre à établir trois liens distincts.

Chaque module d'émission-réception 36 est équipé d'un dispositif de connexion 34 incluant un module de connexion t 28.

Dans le présent mode de réalisation, le dispositif de connexion 34 de chacun des émetteurs-récepteurs radio du modem 13 est une carte SIM 34.

La carte SIM 34 est propre à gérer des réseaux autorisés, c'est-à-dire des réseaux figurant dans le registre de réseaux autorisés mémorisé dans le HSS 14 et/ou dans le module de décision 30 du modem 13.

La carte SIM 34 est une puce qui comprend un microcontrôleur et une mémoire, et qui est propre à mémoriser des informations spécifiques à un utilisateur utilisées pour la mise en oeuvre de l'initiation d'une connexion à un réseau 12.

La carte SIM est configurée pour gérer un profil d'abonné mono-opérateur.

Selon une variante envisageable, le dispositif de connexion 34 du modem 13 est une carte USIM. La carte USIM est propre à gérer un ou plusieurs profils d'abonné, chaque profil d'abonné étant mono-opérateur.

De façon non limitative, chaque dispositif de connexion 34 du modem 13 est propre à mémoriser au moins un IMSI et un ensemble d'informations propres à prouver l'authenticité de l'IMSI.

Dans le mode de réalisation des figures 1 et 2, le module de décision 30 du modem 13 est mémorisé dans une mémoire du terminal 32 et un module de connexion 28 est mémorisé dans une mémoire de chaque dispositif de connexion 34 du modem 13. De fait, les instructions logicielles du module de décision 30 du modem 13 sont exécutées par le processeur du terminal 32, et les instructions logicielles du module de connexion 28 du modem 13 sont exécutées par le microcontrôleur du dispositif de connexion 34 sur la base d'instructions émises par le module de décision 30.

Les modules de connexion 28 et le module de décision 30 du modem 13 contiennent chacun des instructions logicielles qui, une fois exécutées par un ou plusieurs processeurs, mettent chacun en oeuvre au moins certaines étapes d'un procédé de gestion des accès à l'infrastructure 10.

Il est à noter que le module de décision 30 est distinct des trois modules de connexion 28 que comprend le modem 13.

Dans ce cas, le module de décision 30 est, par exemple, une application propre à être installée sur un terminal 32 du modem 13 avec un système d'exploitation, par exemple de type Linux.

Le modem 13 est propre à se connecter aux réseaux 12 selon deux modes de fonctionnement.

Selon un premier mode de fonctionnement M1, le modem 13 établit un ou plusieurs liens avec des réseaux, mais utilise un unique lien avec un réseau 12.

Par définition, un lien est établi avec un réseau 12 lorsque seules des données de signalisation sont échangées entre le modem 13 et le réseau 12 et un lien est utilisé lorsque des données de signalisation et des données différentes des données de signalisation sont échangées entre le modem 13 et le réseau 12.

Le premier mode de fonctionnement M1 correspond à un mode de sélection du meilleur lien.

Selon un deuxième mode de fonctionnement M2, le modem 13 établit au moins deux liens avec les réseaux 12, et utilise au moins deux liens.

Par exemple, dans ce cas à trois modules d'émission/réception, le modem 13 peut établir trois liens mais n'en utiliser que deux.

Le deuxième mode de fonctionnement correspond à une agrégation de liens sur les différents liens éligibles à l'agrégation.

A titre d'exemple, l'agrégation de lien est mise en oeuvre par partage de débit ou par répartition de flux de données.

D'autres techniques d'agrégation de liens sont également envisageables.

Le module de décision 30 est propre à déterminer le mode de fonctionnement du modem 13, à savoir le premier mode de fonctionnement M1 sans agrégation de liens ou le deuxième mode de fonctionnement M2 avec agrégation de liens.

Par « connexion », il est fait référence aux procédures décrites par les normes de télécommunication et qui consistent à identifier puis à authentifier un modem 13 au sein d'un réseau 12 en vue de pouvoir ensuite échanger du trafic au travers de ce réseau 12.

L'équipement de contrôle d'accès 14, également désigné par le sigle HSS, comprend une base de données.

Dans la figure 1, un seul HSS 14 est représenté. Dans le présent mode de réalisation, le HSS 14 est celui d'un opérateur de services sur l'ensemble des réseaux 12 accessibles, par exemple un MVNO, ou celui de son MVNE.

Dans une variante, plusieurs HSS 14 (par exemple un par réseau 12), sont utilisés. Ce sont ceux des MNO opérateurs d'accès radio des réseaux 12.

Le HSS 14 est propre à mémoriser, pour chaque dispositif de connexion 34 inséré dans le modem 13, un registre de réseaux autorisés comprenant des réseaux. En particulier, le registre de réseaux autorisés comprend un identifiant de chaque réseau 12 autorisé.

Par « réseau autorisé », il est entendu un réseau auquel le modem 13 est en mesure de se connecter à partir d'un IMSI et d'une carte SIM déterminés. Dit autrement, un réseau autorisé désigne un réseau sur lequel le modem 13 est susceptible d'être enregistré avec un IMSI contenu dans une carte SIM donnée pour pouvoir s'y connecter.

Dans le présent mode de réalisation, les réseaux du registre de réseaux autorisés sont chacun associés à un IMSI et à une carte SIM donnés, et chaque carte SIM utilise un profil d'abonné mono-opérateur.

Dans le présent mode de réalisation, le dispositif de gestion 16 appartient à l'opérateur de services, par exemple un MVNO.

Le dispositif de gestion 16 est propre à administrer le service d'accès à plusieurs réseaux 12 fourni par l'opérateur de services. Le dispositif de gestion 16 permet notamment audit opérateur de services de déclarer et mémoriser les droits d'accès (profils réseau PR accessibles) des cartes SIM 34 et du modem 13 au service ainsi que les identifiants IMSI et les profils de services applicables à chaque profil réseau PR_{A} ou PR_{B} utilisé, d'administrer à distance le modem 13 (notamment la mise à jour du logiciel, et des droits et paramétrages propres à chaque modem 13 et à chaque carte SIM 34), et de piloter de manière asynchrone le service fourni (notamment le contrôle périodique des droits d'accès au service et la remontée d'événements).

Les échanges entre le dispositif de gestion 16 et le modem 13 sont réalisés via une connexion de données mobiles au travers des réseaux 12. Il est à noter que le dispositif de gestion 16 et le modem 13 sont aptes à fonctionner et à être administrés par l'opérateur de services indépendamment des équipements de contrôle d'accès des opérateurs des réseaux 12 utilisés.

Il est à noter que le modem 13 est apte à fonctionner localement, c'est-à-dire même en l'absence temporaire de connexion avec le dispositif de gestion 16.

Dans d'autres modes de réalisation, le registre de réseaux autorisés mémorisé dans le module de décision 30 du modem 13 est plus étendu que le registre de réseaux autorisés mémorisé contenus dans le HSS 14, c'est-à-dire qu'il contient plus de réseaux autorisés. Une telle situation résulte, par exemple, d'un paramétrage du module de décision 30 consistant à autoriser le modem 13 à accéder à des réseaux de type WIFI, filaire ou satellite, qui ne sont pas listés dans le registre de réseaux autorisés mémorisé dans le HSS 14.

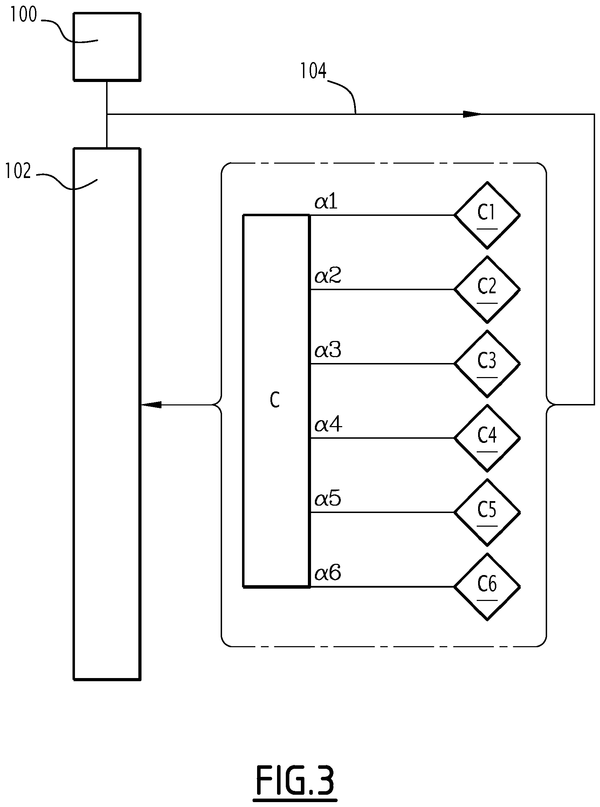

Le fonctionnement de l'infrastructure 10 et notamment de la gestion des accès du modem 13 aux différents réseaux 12_{A}, 12_{B} et 12_{C} est maintenant décrit en référence à la figure 3 qui illustre un ordinogramme d'un exemple de mise en oeuvre d'un procédé de gestion des accès à l'infrastructure 10.

Le procédé comporte une étape de connexion 100 et une étape de prise de décision 102.

Lors de l'étape de connexion 100, le modem 13 se connecte aux réseaux 12 selon le premier mode de fonctionnement M1 ou le deuxième mode de fonctionnement M2.

Lors de l'étape de prise de décision 102, le module de décision 30 prend la décision de changer de mode de fonctionnement, la prise de décision étant basée sur au moins un critère.

En d'autres termes, il est pris la décision de connecter le modem 13 aux réseaux 12 dans un mode différent du mode utilisé lors de l'étape de connexion 100, la prise de décision étant basée sur au moins un critère.

Conformément à la figure 3, une pluralité de critères est prise en compte dans l'exemple décrit.

Plus précisément, six critères C1, C2, C3, C4, C5 et C6 sont pris en compte par le module de décision 30 de manière simultanée ou séquentielle, ou selon toute autre combinaison de calcul possible, pour prendre la décision de changer de mode d'utilisation des réseaux disponibles.

Pour simplifier dans la suite, il est considéré que le critère global C est une multiplication binaire des critères C1, C2, C3, C4, C5 et C6, pondérés selon une formule utilisant des coefficients de pondérations α₁, α₂, α₃, α₄, α₅ et α₆ pour former un seul critère global C qui détermine la décision de changer de mode d'utilisation des réseaux disponibles.

Un premier critère C1 est la variation de la qualité de service fournie par les réseaux 12 par rapport à un seuil.

Cette expression signifie que la variation de la qualité de service fournie par les réseaux 12 est comparée à un seuil et en fonction de cette comparaison, le premier critère C1 est rempli ou non.

Le critère de « qualité de service » regroupe des critères qui sont de nature quantitative et fonction des différents services mobiles souscrits et utilisés par l'utilisateur, tel que par exemple une puissance ou une qualité minimale de signal radio, ou un dépassement de seuil sur un autre paramètre de qualité de service.

Le premier critère C1 est ainsi un critère relatif à la stabilité dans le temps de la qualité réelle mesurée périodiquement sur chacun des liens radio.

Un deuxième critère C2 est l'amplitude du mouvement du modem 13 par rapport à un seuil.

Par exemple, une manière d'évaluer le deuxième critère C2 est de suivre l'évolution du signal d'un capteur GPS (acronyme de « Global Positioning System » signifiant littéralement « système de positionnement global »)

Un troisième critère C3 est la position du modem 13 par rapport à des zones prédéfinies.

Pour mettre en oeuvre une mesure du troisième critère C3, un capteur GPS ou un réseau de balises de localisation peut être utilisé.

Un quatrième critère C4 est l'accomplissement d'une séquence d'au moins une action de l'utilisateur du modem 13.

La ou les actions sont mises en oeuvre directement sur le modem 13 ou via un dispositif de pilotage du modem 13.

Un dispositif de pilotage est, par exemple, un écran de commande.

Une illustration d'une action est l'appui sur un bouton, notamment un bouton à deux positions, une position d'activation et une position de désactivation.

Un cinquième critère C5 est la possibilité d'établir au moins deux liens avec les réseaux 12.

Cela est impossible si seul un réseau 12 est accessible, ou si un seul réseau 12 est éligible au mode agrégation de liens.

Dans un tel cas où un seul lien peut être établi avec l'ensemble des réseaux 12 et que le modem 13 est dans le deuxième mode de fonctionnement M2, le procédé comporte une étape de basculement du deuxième mode de fonctionnement M2 au premier mode de fonctionnement M1.

Un sixième critère C6 est la configuration du modem 13.

La configuration du modem 13 est déterminée par au moins un paramètre.

De préférence, chaque paramètre est paramétré par l'opérateur de services à distance. Autrement formulé, la configuration du modem 13 est paramétrée par le dispositif de gestion 16, indépendamment des opérateurs de réseaux, c'est-à-dire que chaque paramètre est déterminé par le dispositif de gestion 16.

Parmi les paramètres, il est possible de citer les droits d'utilisation des deux modes, l'éligibilité de chaque lien ou de chaque type de réseau 12 au deuxième mode de fonctionnement M2, le niveau minimum de qualité de service requis par type de lien, l'amplitude maximum de mouvement ou de variation de qualité radio requis pour le mode agrégation de liens, la fréquence d'évaluation de chaque critère, les règles de répartition du trafic entre les différents liens utilisés, l'existence d'un réseau 12 préféré.

A titre d'exemple particulier, les liens satellitaires peuvent être exclus pour des raisons de coût de communication ou en présence d'un réseau 12 préféré.

En variante, toute combinaison des critères précédents peut être considérée lors de l'étape de prise de décision, et notamment un seul des critères.

En l'espèce, chaque critère est cumulatif, de sorte qu'il faut vérifier chaque critère pour être éligible à l'emploi du deuxième mode.

En fonctionnement, le critère global C est réévalué périodiquement ainsi que l'indique la flèche 104 sur la figure 3. Chaque fréquence de réévaluation est, de préférence, paramétrable par l'opérateur de services.

Le procédé assure un accès au meilleur mode de fonctionnement entre le premier mode de fonctionnement M1 et le deuxième mode de fonctionnement M2.

Un tel procédé permet de répondre au besoin de connectivité en mobilité ou en arrêt puisqu'un basculement entre le premier mode de fonctionnement M1 et le deuxième mode de fonctionnement M2 est possible en cours de fonctionnement. Le modem 13 n'est pas figé dans les deux modes de fonctionnement M1 et M2.

Plus précisément, le procédé permet une maximisation des débits disponibles pour le modem 13 avec une connectivité radio multiple en tenant compte des effets de la mobilité sur la qualité des liens radio, et des besoins des utilisateurs ou des objets connectés au modem 13.

Le procédé peut, en outre, être mis en oeuvre au démarrage ou en fonctionnement.

En plus, le procédé peut être mis en oeuvre par un système et un produit programme d'ordinateur. L'interaction du produit programme d'ordinateur avec le système permet de mettre en oeuvre le procédé de gestion.

Le système est un ordinateur.

Plus généralement, le système est un calculateur électronique propre à manipuler et/ou transformer des données représentées comme des quantités électroniques ou physiques dans des registres du système et/ou des mémoires en d'autres données similaires correspondant à des données physiques dans des mémoires, des registres ou d'autres types de dispositifs d'affichage, de transmission ou de mémorisation.

Le système comporte un processeur comprenant une unité de traitement de données, des mémoires et un lecteur de support d'informations. Le système peut également comprendre un clavier et une unité d'affichage.

Le produit programme d'ordinateur comporte un support lisible d'informations.

Un support lisible d'informations est un support lisible par le système, usuellement par l'unité de traitement de données. Le support lisible d'informations est un médium adapté à mémoriser des instructions électroniques et capables d'être couplé à un bus d'un système informatique.

A titre d'exemple, le support lisible d'informations est une disquette ou disque souple (de la dénomination anglaise de « *floppy disk* »), un disque optique, un CD-ROM, un disque magnéto-optique, une mémoire ROM, une mémoire RAM, une mémoire EPROM, une mémoire EEPROM, une carte magnétique ou une carte optique.

Sur le support lisible d'informations est mémorisé un programme d'ordinateur comprenant des instructions de programme.

Le programme d'ordinateur est chargeable sur l'unité de traitement de données et est adapté pour entraîner la mise en oeuvre d'un procédé de gestion.

### LEXIQUE

HSS : sigle de « Home Subscriber Server » pour « serveur central d'abonnés »
IMSI : sigle de « International Mobile Subscriber Identity » pour « identité internationale d'abonné mobile », également appelé numéro d'identification mobile
MNO : sigle de « Mobile Network Operator » pour « opérateur de réseau mobile », qui désigne une compagnie qui possède son propre réseau radio de télécommunication mobile
MVNE : sigle de « Mobile Virtual Network Enabler » pour « fournisseur de services de réseau mobile virtuel », qui désigne une compagnie offrant des solutions techniques permettant à un MVNO de proposer des services mobiles sans déployer de coeur de réseau mobile complet ni d'interconnexion directe avec un ou plusieurs MNO
MVNO : sigle de « Mobile Virtual Network Operator » pour « opérateur de téléphonie mobile virtuel », également appelé opérateur de services mobiles, qui désigne une compagnie de télécommunication qui, ne possédant pas de réseau d'accès radio en propre, loue les réseaux d'un ou plusieurs MVNE et/ou MNO pour pouvoir proposer des services mobiles
SIM : sigle de « Subscriber Identity Module » pour « module d'identification d'abonné »
UMTS (ou 3G) : sigle de « Universal Mobile Telecommunications System » pour « système de télécommunication mobile universel »
USIM : sigle de « Universal Subscriber Identity Module» pour « module d'identité du souscripteur universel»
2G : système de télécommunication de deuxième génération.
4G : système de télécommunication de quatrième génération. La LTE (signe de « Long Term Evolution ») est un exemple de système de télécommunication de quatrième génération.

## Revendications

1. Procédé de gestion des accès à une infrastructure de télécommunication (10), l'infrastructure de télécommunication (10) comprenant :
- des réseaux de télécommunication (12), les réseaux de télécommunication (12) étant propres à fournir des services, et
- un modem (13) propre à se connecter aux réseaux (12) :
- selon un premier mode de fonctionnement (M1) dans lequel le modem (13) établit un ou plusieurs liens avec des réseaux (12), mais utilise un unique lien avec un réseau (12), ou
- selon un deuxième mode de fonctionnement (M2) dans lequel le modem (13) établit au moins deux liens avec les réseaux (12), et utilise au moins deux liens,
le procédé comportant les étapes de:
- connexion du modem (13) aux réseaux (12) selon un des deux modes de fonctionnement (M1, M2), et
- prise de la décision de connecter le modem (13) aux réseaux (12) dans un mode de fonctionnement (M1, M2) différent du mode de fonctionnement (M1, M2) courant, la prise de décision étant basée sur au moins un critère.

2. Procédé de gestion selon la revendication 1, dans lequel un critère est la variation de la qualité de service fournie par les réseaux par rapport à un seuil.

3. Procédé de gestion selon la revendication 1 ou 2, dans lequel un critère est l'amplitude du mouvement du modem (13) par rapport à un seuil.

4. Procédé de gestion selon l'une quelconque des revendication 1 à 3, dans lequel un critère est la position du modem (13) par rapport à des zones prédéfinies.

5. Procédé de gestion selon l'une quelconque des revendications 1 à 4, dans lequel le procédé comporte une étape de basculement du deuxième mode de fonctionnement (M2) au premier mode de fonctionnement (M1) dès qu'un seul lien peut être établi avec l'ensemble des réseaux (12).

6. Procédé de gestion selon l'une quelconque des revendications 1 à 5, dans lequel un critère est au moins un paramètre de la configuration du modem (13).

7. Procédé de gestion selon la revendication 6, dans lequel les paramètres de la configuration incluent les droits d'utilisation des deux modes, l'éligibilité de chaque lien ou de chaque type de réseau (12) au deuxième mode de fonctionnement (M2), le niveau minimum de qualité de service requis par type de lien et les règles de répartition du trafic entre les différents liens utilisés.

8. Procédé de gestion selon la revendication 6 ou 7, dans lequel l'infrastructure de télécommunication (10) comporte un dispositif de gestion (16), la configuration du modem (13) étant paramétrée par le dispositif de gestion (16) indépendamment des opérateurs de réseaux.

9. Procédé de gestion selon la revendication 8, dans lequel l'infrastructure de télécommunication (10) comporte, en outre, un module de décision (30) propre à mettre en oeuvre l'étape de prise de décision, le dispositif de gestion (16) est propre à paramétrer un module de décision (30).

10. Procédé de gestion selon la revendication 9, dans lequel le dispositif de gestion (16) est propre à paramétrer un module de décision (30) par une communication asynchrone par rapport à la mise en oeuvre de l'étape de prise de décision par le module de décision (30).

11. Procédé de gestion selon l'une quelconque des revendications 1 à 10, dans lequel un critère est la détection de l'accomplissement d'une séquence d'au moins une action de l'utilisateur du modem (13), la détection étant réalisée soit directement sur le modem (13), soit via un dispositif de pilotage du modem (13).

12. Produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en oeuvre d'au moins une étape d'un procédé selon l'une quelconque des revendications 1 à 11 lorsque le programme d'ordinateur est mis en oeuvre sur l'unité de traitement des données.

13. Support lisible d'informations mémorisant un programme d'ordinateur comprenant des instructions de programme, le programme d'ordinateur étant chargeable sur une unité de traitement de données et adapté pour entraîner la mise en oeuvre d'au moins une étape d'un procédé selon l'une quelconque des revendications 1 à 11 lorsque le programme d'ordinateur est mis en oeuvre sur l'unité de traitement des données.

14. Infrastructure de télécommunication (10) comprenant :
- des réseaux de télécommunication (12), les réseaux (12) étant propres à fournir des services, et
- un modem (13) propre à se connecter aux réseaux (12) :
- selon un premier mode de fonctionnement (M1) dans lequel le modem (13) établit un ou plusieurs liens avec des réseaux (12), mais utilise un unique lien avec un réseau (12), ou
- selon un deuxième mode de fonctionnement (M2) dans lequel le modem (13) établit au moins deux liens avec les réseaux (12) et utilise au moins deux liens,
l'infrastructure de télécommunication (10) étant propre à :
- connecter le modem (13) aux réseaux (12) selon un des deux modes de fonctionnement (M1, M2), et
- prendre la décision de connecter le modem (13) aux réseaux (12) dans un mode de fonctionnement différent du mode de fonctionnement courant, la prise de décision étant basée sur au moins un critère.
